Europäisches Patentamt

European Patent Office

Office européen des brevets

(11) Publication number: **0 181 007**
A2

# (12) EUROPEAN PATENT APPLICATION

(21) Application number: **85114271.1**

(22) Date of filing: **08.11.85**

(51) Int. Cl.⁴: **G 06 F 13/38**
**G 06 F 13/36**

(30) Priority: **09.11.84 US 670197**

(43) Date of publication of application:
**14.05.86 Bulletin 86/20**

(84) Designated Contracting States:
**AT BE CH DE FR GB IT LI LU NL SE**

(71) Applicant: **SPACELABS, INC.**
**4200 150th Avenue NE**
**Redmond Washington 98073-9713(US)**

(72) Inventor: **Gilbert, Jeffrey S.**
**2330 SE Brookwood**
**209 Hillsboro Oregon(US)**

(74) Representative: **Vossius Vossius Tauchner Heunemann**
**Rauh**
**Siebertstrasse 4 P.O. Box 86 07 67**
**D-8000 München 86(DE)**

(54) **Bus broadcast method and apparatus.**

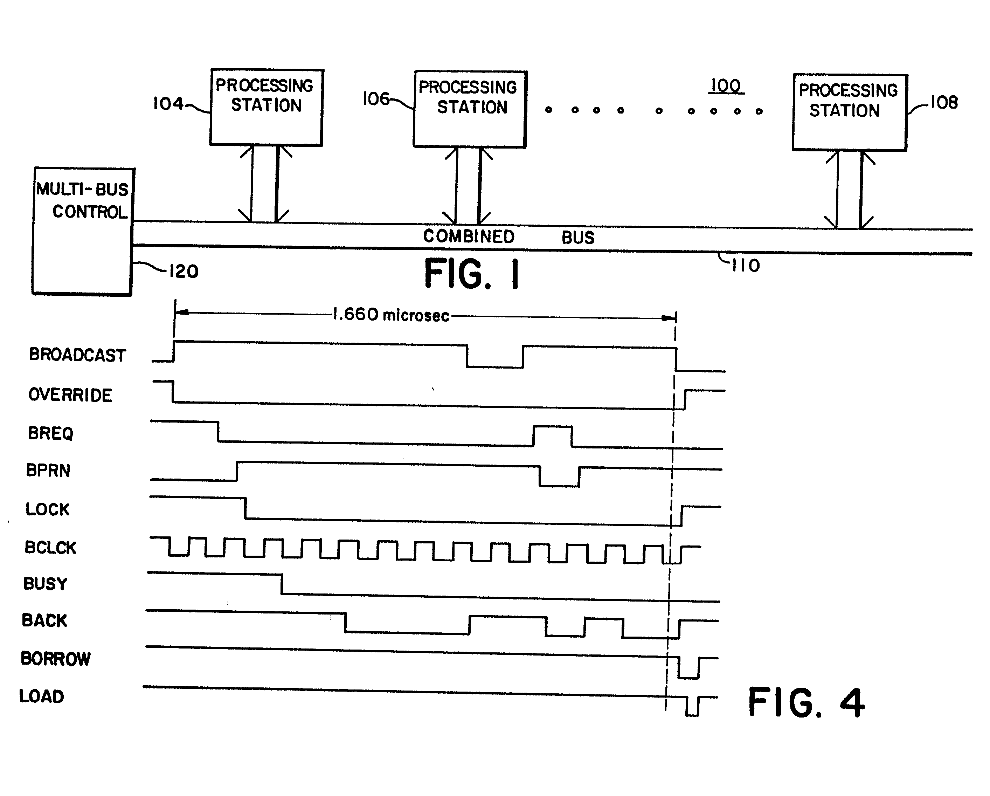

(57) A broadcast channel capability is added to a multiprocessing combined bus implementation. A transmitter channel portion includes means for continually locking out other combined bus coupled modules from control of the combined bus until the data broadcast is complete. Circuitry is also provided for generating a delayed local broadcast acknowledge since the receiver modules will not generate a normal acknowledge signal due to unique decoding of the receiver circuitry. Receiver circuitry includes data latches into which data words transmitted during the broadcast are sequentially latched. The data latches are coupled to the receiver's CPU data bus. Circuitry is provided for signalling the receiver CPU when the transfer is complete. Fig. 1

FIG. 1

EP 0 181 007 A2

VOSSIUS · VOSSIUS · TAUCHNER · HEUNEMANN · RAUH

PATENTANWÄLTE

SIEBERTSTRASSE 4 · 8000 MÜNCHEN 86 · PHONE: (089) 47 40 75
CABLE: BENZOLPATENT MÜNCHEN · TELEX 5-29 453 VOPAT D

0181007

– 1 –

Our Ref.: U 112 EP
Case: V-670,197-Z
Spacelabs, Inc.
Redmond, Washington, USA

Nov. 8, 1985

## BUS BROADCAST METHOD AND APPARATUS

This invention relates to a transfer of data over a bus from one module to more than one other module simultaneously, that is, to the transfer of data in a bus broadcast mode.

Many of today's multiprocessing, multimonitor communication systems comprise a plurality of modules coupled by a combined bus wherein at least one of the modules (and possibly any of the modules) is enabled to transfer data to the other modules over the combined bus only by requesting and receiving control of the bus. The combined bus serves as an extension of each module's internal data, address and control buses. In such arrangements a module obtains control of the bus from a bus arbitrator, transmits data and awaits a transfer acknowledge before continuing.

However, it is sometimes the case that one module is required to send the same data to two or more other modules of the system over the combined bus simultaneously. With the above described arrangement thi is not possible. What is required is a broadcast mode of operation.

The present invention provides for a multipoint communication system within a combined bus arrangement wherein a module is enabled to transfer data only upon requesting and receiving control of the combined bus. The invention comprises a broadcast mode of operation whereby one module can transfer data to two or more other modules simultaneously. The broadcast means comprises transmit and receiver circuitry.

The transmit circuitry further comprises means for continuously locking out all other modules from taking control of the combined bus while the transmit module is in the broadcast mode even though the transmission may include a plurality of data words. The transmit circuit also includes means for locally generating a delayed broadcast acknowledge signal for each of said data words transmitted.

The receiver circuit further includes means for sequentially loading said data words as they are received into a plurality of latch circuits which are coupled to the receiving module's internal data bus.

FIG. 1 is an overall block diagram of a combined bus communication system suitable for use with the present invention.

FIG. 2 is a block diagram of a transmit channel for a broadcast portion of the system of FIG. 1.

FIG. 3 is a block diagram of a receiver channel for a broadcast portion of the system of FIG. 1.

FIG. 4 is a timing diagram of a portion of the signals used in FIGS. 1-3.

Referring now to FIG. 1, a simplified block diagram of a combined bus arrangement designated generally 100 is disclosed. Basically the combined bus is an extension of the address, data and control buses of the modules coupled to it which allows shared memory access. A plurality of modules, for example, modules 104, 106 and 108 are shown bi-directionally coupled to a combined bus 110. Which module has control of the bus 110 at any one time is determined by the bus arbitration circuit 120.

Combined bus arrangements such as the one in FIG. 1 are conventional and are implemented in circuitry in accordance with well published specifications. In the preferred embodiment a combined bus arrangement was implemented in accordance with Intel's Multibus Specification, No. 9800683-04. In this system in the normal mode of operation, a local module will initiate a specified memory address which will initiate a bus request BREQ/. For example, in the preferred embodiment when the internal 24 bit address bus of the requesting module matches the qualifications specified by decode circuitry 202 within the module, bus exchange logic 222 asserts BREQ/ over the combined bus 110 to a priority circuit within arbitrator 120. The priority circuit's job is to grant a request to one of the requesting modules and arbitrate whenever more than one module requests combined bus control at the same time. The arbitrator 120 will issue a combined bus control signal BPRN back to a requesting module granting control of the combined bus. The arbitrator also provides a combined bus clock signal BCLK/, used to synchronize BREQ/.

Following control of the combined bus 110 the transmitting module places the data to be transferred, the address of the receiving module and the necessary control signals on the combined bus. The data and address must be maintained on the combined bus 110 until the data transfer to the receiving module is complete, indicated by XACK/.

When a receiving module has completed a combined bus transfer it will transmit a transfer acknowledge signal XACK/ back to the transmitting module. While waiting for XACK/ the transmitting module issues wait state signals to the transmitting CPU so as to maintain the data and address information on the combined bus 110.

This is the normal mode of operation for the Intel Multibus identified earlier and the detail circuitry for implementing the above is well understood and documented and is not presented herein. However, when it is desired to transmit to more than one module simultaneously the above described bus operation is inadequate. What is required are transmit and receive broadcast channels which are added to the usual combined bus implementation to accomplish simultaneous transmission.

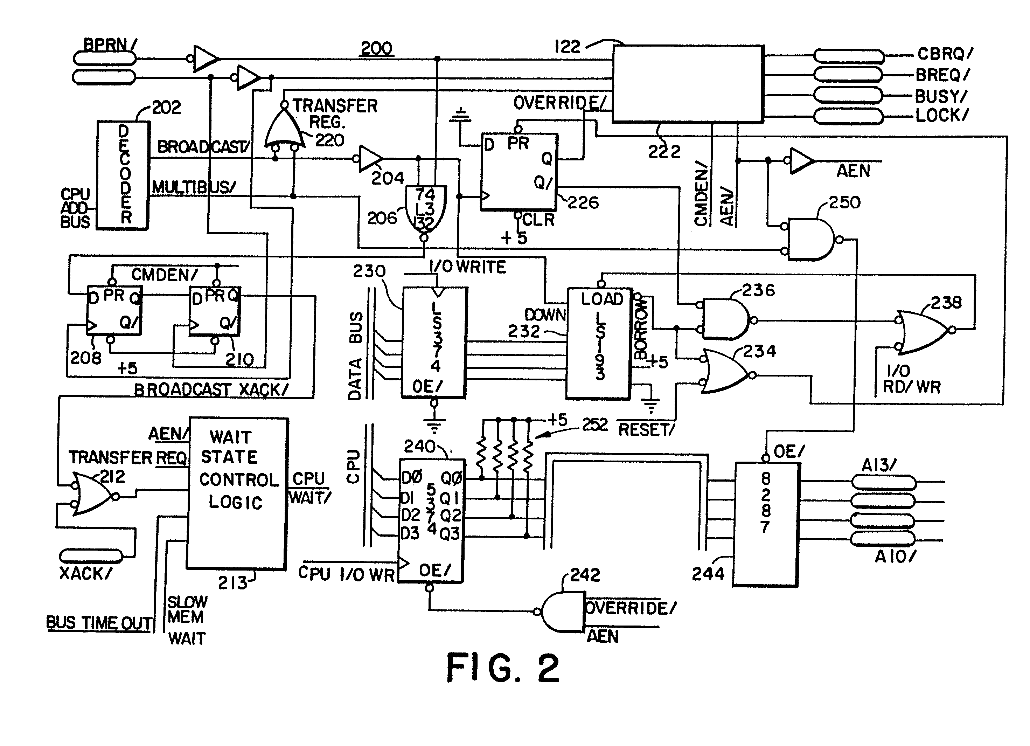

Referring now to FIG. 2, a preferred embodiment detailed block diagram of a broadcast channel transmitter designated generally 200 for use with the combined bus 110 is disclosed. Local decoder circuitry 202 within the broadcast channel 200 decodes the local CPU address bus to generate a BROADCAST/ signal and COMBINED BUS/ signal which are both active low. After being inverted by inverter 204 the broadcast signal is provided to NAND gate 206 (implemented as a 74LS132) along with the BPRN signal provided by the arbitrator 120. The output of gate 206 is provided to the D input of D flip flop 208 which is clocked by signal BCLK. The Q output of D flip flop 208 is provided to the D input of flip flop 210 which is clocked by the BCLK/ signal. The Q output of flip flop 210 is provided as a BROADCAST XACK/ signal to an input of the negative logic OR gate 212 (implemented for example as a 74LS08). The other input to gate 212 is the combined bus XACK/ signal provided by a receiving module as a transfer acknowledge during the normal mode of operation. The output of gate 212 is provided to wait state control logic circuitry 213 for providing CPU wait signals to the local CPU. The BROADCAST/ and COMBINED BUS/ signals are also provided as inputs to the negative logic OR gate 220 (implemented as a 74LS08) whose output is provided as a TRANSFER REQUEST signal to bus exchange logic circuit 222.

The output of inverter 204 (BROADCAST) is provided as a clock signal to D flip flop 226. The D input of D flip flop 226 is held low at all times. With every low to high logic level transition received from inverter 204 D flip flop 226 provides a low Q output labelled OVERRIDE/ to the bus exchange logic 222. Other inputs to the bus exchange logic 222 include the BPRN signal and the BCLK signal. In response to the various inputs the bus exchange logic 222 provides a BUSY/ signal and LOCK/ signal which are specified by the Intel Multibus Specification. In addition, bus exchange logic 222 provides several enabling signals such as CMDEN/ and AEN/ whose use will be described hereinafter.

When it is desired to use the broadcast transmit channel the transmitting CPU transmits over the least significant four bits of the CPU local data bus information concerning the number of bytes to be transferred. This information is latched into latch 230 with an I/O write signal. The output of latch 230 is provided to up down counter 232. The output of inverter 204, the BROADCAST signal, is provided as a down count signal to counter 232. The BORROW output of counter 232 is provided to negative logic OR gate 234 (implemented as a 74LS08) along with a RESET/ signal. The output of gate 234 is provided to the preset input of D flip flop 226, to take away the OVERRIDE/ signal.

The BORROW output of counter 232 is also provided to negative logic AND gate 236 (implemented as a 74LS32) whose other input comes from the Q output of D flip flop 226. The output of gate 236 is provided to the negative logic OR gate 238 (implemented as a 74LS08) along with an I/O read/write signal from the local CPU. The output of gate 238 provides the load signal for counter 232. The value held in latch 230 is thus reloaded by BORROW, initializing the counter for a new broadcast transfer.

The least significant four bits of the CPU data bus which were provided to latch 230 are also provided to the quad D flip flop circuit 240. The CPU I/O write signal is provided to D flip flop 240 to clock the CPU data signals in. An enable signal is provided to the D flip flop 240 via the output of NAND gate 242 (such as a 74LS132) whose inputs are the OVERRIDE/ signal from D flip flop 226 and the AEN signal from the bus exchange logic 222. The Q outputs of the circuit 240 are provided to circuit 244 via bus 246. Circuit 244 provides four address lines onto the combined bus 110.

The AEN signal from bus exchange logic 222 and the COMBINED BUS/ signal from decoder 202 are provided to negative logic AND gate 250 (implemented as a 74LS32) whose output is provided as an enable signal to 244.

When a combined bus request is made it is possible to provide an OVERRIDE/ signal in response to which the bus exchange logic 222 generates the LOCK/ signal. For each byte to be transferred over the broadcast channel the transmitting module must request and obtain control of the combined bus 110. If the LOCK/ signal is asserted continuously throughout the broadcast interval there will be no question that the request will be granted automatically since the LOCK/ signal insures that no other module will request control of the combined bus 110 while LOCK/ is present.

To insure that LOCK/ is present continuously the BROADCAST signal from decoder 202 and inverter 204 clocks D flip flop 226 to provide OVERRIDE/ continuously to bus exchange logic 222 until a low preset signal is provided from counter 232, gated through gates 236 and 238.

Before a transmit module indicates a combined bus request for a broadcast transfer it loads latch 230 with the last four bits of its data bus. The data represents the number of data bytes to be transferred during the broadcast. This need be done only initially, and, therefore, only when the number of bytes per transfer changes. With the next transmit module CPU I/O read write cycle a load signal via gate 238 is generated to load counter 232 with the contents of latch 230. With each BROADCAST signal generated by the decoder 202 and inverter 204 during the broadcast interval counter 232 is caused to count down until the last byte has been transferred. When the count reaches zero the borrow output of counter 232 goes low, passing through gate 234 and causing the pre-set of flip flop 226 to go low. This terminates OVERRIDE/ causing LOCK/ to disappear. The transfer is complete.

Once borrow is low and Q from flip flop 226 is low, gate 236 generates a load signal to counter 232 to reload the value from latch 230.

Under this combined bus interface the identification of the receiver module is provided by the least significant four bits of the data bus at the outset of a normal combined bus transfer. This is loaded into latch 240 and via bus 246 and buffer 244 converted to a four bit address to be transmitted over the combined bus 110 and decoded by the appropriate receiver decoder circuitry. But when the broadcast mode is intended, the OVERRIDE/ signal via gate 242 disables latch 240 and the pull up at 252 causes four ones to be loaded into buffer 244. Buffer 244 inverts the signals and transmits four zeros over the address bus portion of the combined bus. Buffer 244 is enabled by the COMBINED BUS/ signal via gate 250. Four zeros on the most significant four bits of the address portion of the combined bus 110 represents a broadcast transfer to the receiving circuitry.

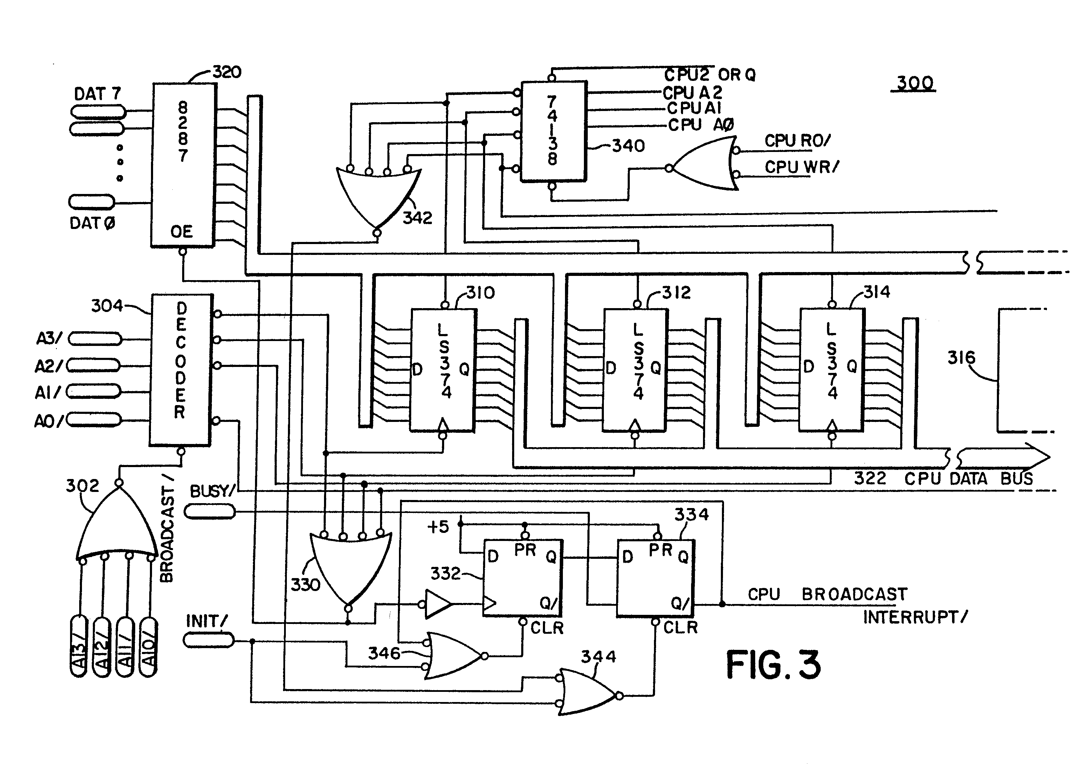

Normally during a multibus transfer, wait states are caused by the wait state control logic 213 to the CPU until a transfer acknowledge XACK/ is received from the intended receiver module. However, in a broadcast mode, because the broadcast address (0's on the most significant four combined bus address bits) is decoded only by unique receiver circuitry (FIG. 3), the receiver modules do not respond with a XACK/. Hence, a BROADCAST XACK/ must be generated locally by the transmit module. This is the purpose of the flip flops 208 and 210. They provide a delay between the onset of each BROADCAST/ signal and the generation of BROADCAST XACK/ to allow the transfer of each byte of data to be completed.

Those modules which are able to receive broadcast transmissions are equipped with the broadcast receiver channel designated generally 300 of FIG. 3. The last four bits of the address bus from circuit 244 in FIG. 2 are provided to four input negative logic OR gate 302 (implemented as a four input TTL AND gate). When all zeros are present a low signal is provided to enable decoder circuitry 304.

The least significant four bits of the address bus are provided as inputs to circuitry 304. During the broadcast mode these four bits change incrementally for each byte of data (each byte has a unique address) to be transferred such that decoder circuitry 304 strobes the receiver data latches even numbers 310 through 316 in turn. The data input sides of the latches 310 through 316 are coupled to combined bus 110 via buffer 320 and on their output sides to the receiver's data bus 322. As each data byte is received via the combined bus 110 and latch 320 it is loaded in turn into one of latches 310 through 316.

Negative logic OR gate 330 (implemented as a four input AND gate) whose inputs are coupled to the outputs of decoder circuit 304, clocks flip flop 332 which provides a high signal at its Q output. When the transfer of data to the latches 310 to 316 is complete, the BUSY/ signal will clock the high Q output of flip flop 332 into flip flop 334 causing the Q/ output of flip flop 334 to provide a BROADCAST INTERRUPT/ to the receiver CPU to inform it that the broadcast transfer is complete.

When the broadcast in complete the BROADCAST INTERRUPT/ signal interrupts the receiver CPU to inform it that a broadcast has occurred. The receiving CPU acts through the decoder/demultiplexer 340 to perform loading of data out of latches 310 through 316. One by one the latches 310 through 316 are enabled to couple their output onto the receiver's CPU data bus 332. When the first of the data has been acquired by the receiver CPU the output of circuit 340 is decoded through negative logic OR gate 342 (implemented as a four input TTL AND gate) and provided via negative logic OR gate 344 (implemented as or 74LS08) to clear flip flop 334. Prior to this BROADCAST INTERRUPT/ through negative logic OR gate 346 (implemented as a 74LS08) cleared flip flop 332. The normal combined bus signal INIT/ can be used as a global reset to clear flip flop 332 and 334 as well.

FIG. 4 shows the relative timing of a portion of the signals used and generated by the circuitry of FIGS. 1-3.

Hence, by the addition of the circuits in FIGS. 2 and 3, a conventional combined bus implementation such as an Intel MULTIBUS can be modified to provide a broadcast channel capability.

## CLAIMS

1.    A multipoint communication system comprising:

a plurality of processing stations coupled together by a combined bus; and

broadcast means for transmitting data from one of said processing stations to two or more other processing stations simultaneously over said combined bus, whereby a data broadcast mode is provided.

2.    The system of Claim 1 whreein any of said processing stations is enabled to transfer data to the other processing stations over said combined bus only after requesting and receiving control of said bus.

3.    The system of Claim 2 wherein said broadcast means comprises:

a transmit circuit including means for continuously locking out all of said processing stations except said transmit station from control of said combined bus until data transmission is complete.

4.    The system of Claim 3 wherein said broadcast means comprises:

a receiver circuit intended for temporary reception of data transmitted during said broadcast mode prior to placing said data on the receiving station's data bus.

5.     The system of Claim 4 wherein said data to be transmitted during said broadcast mode comprises a plurality of data words.

6.     The system of Claim 5 wherein said transmit circuit further comprises:
     means for locally generating a delayed broadcast acknowledge signal for said transmit station after transmission of each of said data words.

7.     The system of Claim 5 or 6 wherein said receiver circuit further comprises:
     means for sequentially loading said data words as they are received into a plurality of latch circuits coupled to said data bus.

8.     The system     of Claim 7 wherein said receiver circuit further comprises:
     means for sequentially coupling said data from said latch circuits to said data bus as they are received by said latch circuits.

9.     The asystem     of Claim 8 wherein said system further comprises means for notifying said receiver stations when said data transfer is complete.

10.     Method of transferring data from one processing station to more than one other processing stations, comprising transmitting said data from said one processing station to said more than one processing stations simultaneously over a combined bus, thereby providing a data broadcast mode.

PROCESSING STATION 104

PROCESSING STATION 106

100

PROCESSING STATION 108

MULTI-BUS CONTROL

COMBINED BUS

120

**FIG. 1**

110

1.660 microsec

BROADCAST

OVERRIDE

BREQ

BPRN

LOCK

BCLCK

BUSY

BACK

BORROW

LOAD

**FIG. 4**

FIG. 2

FIG.3